(19) Europäisches Patentamt
European Patent Office
Office européen des brevets

(11) **EP 3 042 431 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(21) Anmeldenummer: **14734833.8**

(22) Anmeldetag: **03.07.2014**

(51) Int Cl.:
*H02J 5/00* *(2016.01)*          *H02J 7/02* *(2016.01)*
*H02M 7/217* *(2006.01)*          *B60L 11/18* *(2006.01)*

(86) Internationale Anmeldenummer:
**PCT/EP2014/064236**

(87) Internationale Veröffentlichungsnummer:
**WO 2015/032524 (12.03.2015 Gazette 2015/10)**

(54) **VORRICHTUNG ZUR INDUKTIVEN ENERGIEÜBERTRAGUNG UND VERFAHREN ZUM BETREIBEN EINER VORRICHTUNG ZUR INDUKTIVEN ENERGIEÜBERTRAGUNG**

APPARATUS FOR INDUCTIVE ENERGY TRANSFER AND OPERATION METHOD THEREFOR

DISPOSITIF DE TRANSFERT D'ÉNERGIE PAR VOIE INDUCTIVE ET MÉTHODE D'OPÉRATION DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2013 DE 102013217816**

(43) Veröffentlichungstag der Anmeldung:
**13.07.2016 Patentblatt 2016/28**

(73) Patentinhaber: **Robert Bosch GmbH**
**70442 Stuttgart (DE)**

(72) Erfinder:
• DIEKHANS, Tobias
  **70563 Stuttgart-Vaihingen (DE)**
• PLUM, Thomas
  **70197 Stuttgart (DE)**

(56) Entgegenhaltungen:
**DE-A1-102010 054 472      DE-A1-102011 119 259
GB-A- 2 499 452**

**Beschreibung**

Die vorliegende Erfindung betrifft eine Vorrichtung zur induktiven Energieübertragung, sowie ein Verfahren zum Betreiben einer Vorrichtung zur induktiven Energieübertragung.

Stand der Technik

Elektrofahrzeuge und Plugin-Hybridfahrzeuge, deren Antrieb ganz oder zumindest teilweise mittels eines Elektromotors erfolgt, sind bekannt. Dabei wird die elektrische Energie zum Antrieb des Elektromotors von einem elektrischen Energiespeicher, beispielsweise einer Traktionsbatterie, bereitgestellt. Für das Aufladen dieses Energiespeichers existieren verschiedene Ansätze.

Beispielsweise ist es möglich, das Elektrofahrzeug mittels eines geeigneten Ladekabels galvanisch mit einer Ladestation zu verbinden. Hierzu muss ein Benutzer eine elektrische Verbindung zwischen Elektrofahrzeug und Ladestation herstellen. Dies kann insbesondere bei schlechten Witterungsverhältnissen, wie zum Beispiel Regen, als unangenehm empfunden werden. Durch die sehr eingeschränkte elektrische Reichweite von Elektro- und Plugin-Hybridfahrzeugen muss diese Kabelverbindung durch den Benutzer zudem sehr oft hergestellt werden, was von vielen Nutzern als großer Nachteil von Elektrofahrzeugen gegenüber konventionellen Fahrzeugen empfunden wird.

Daher existieren auch kabellose Lösungen zur Energieübertragung zwischen Ladestation und Fahrzeug. Hierbei wird die Energie von der Ladestation über ein magnetisches Wechselfeld zu dem Fahrzeug übertragen. Die Energie aus dem magnetischen Wechselfeld wird in dem Fahrzeug in elektrische Energie umgewandelt und die elektrische Energie dem Energiespeicher des Fahrzeugs zugeführt. Bei dieser Lösung ist es jedoch erforderlich, dass das Fahrzeug möglichst präzise über der Ladestation angeordnet wird. In Abhängigkeit von Abstand und Ausrichtung der Primärspule in der Ladestation und der Sekundärspule in dem Fahrzeug ergeben sich unterschiedliche Einflüsse auf das kabellose Ladesystem. Dabei kann der Koppelfaktor des Spulensystems stark schwanken. In diesem Fall besteht die Gefahr, dass das Ladesystem nicht in einem optimalen Arbeitspunkt betrieben wird, was in der Regel zu einem schlechteren Wirkungsgrad und/oder einem höheren magnetischen Wechselfeld im Luftspalt zwischen Primärspule und Sekundärspule führt.

Die Druckschrift DE 10 2010 055 696 A1 offenbart ein System zur kontaktlosen Übertragung, wobei die Frequenz des Übertragungssystems auf der Primärseite in Abhängigkeit von Zustandsgrößen der Sekundärseite angepasst wird. Neben einer reinen Anpassung der Systemparameter auf der Primärseite besteht darüber hinaus auch die Möglichkeit, durch eine sekundärseitige oder beidseitige Leistungsregelung den Betriebspunkt des induktiven Ladesystems anzupassen. Ein derartiges System wird beispielsweise in der Druckschrift US 2011/0231029 A1 beschrieben, wobei ein zusätzlicher Spannungswandler auf der Sekundärseite benötigt wird.

Die Druckschrift DE 10 2010 054 472 A1 beschreibt eine Vorrichtung zur induktiven Übertragung elektrischer Energie.

Die Druckschrift GB 2 499 452 A beschreibt ein induktives Verfahren zum Versorgen eines Fahrzeugs mit elektrischer Energie unter Verwendung eines Gleichrichters.

Die Druckschrift DE 10 2011 119259 A1 beschreibt einen Verdopplergleichrichter für ein mehrphasiges kontaktloses Energieübertragungssystem.

Es besteht daher ferner ein Bedarf nach einer induktiven Energieübertragung, die eine verbesserte Anpassung der Energieübertragung bei variablem Koppelfaktor ermöglicht. Darüber hinaus besteht ein Bedarf nach einer effizienten und kostengünstigen Realisierung einer induktiven Energieübertragung bei variablem Koppelfaktor.

Offenbarung der Erfindung

Gemäß einem ersten Aspekt schafft die vorliegende Erfindung eine Vorrichtung zur induktiven Energieübertragung mit den Merkmalen des Patentanspruchs 1.

Gemäß einem weiteren Aspekt schafft die vorliegende Erfindung ein Verfahren zum Betreiben einer Vorrichtung zur induktiven Energieübertragung mit den Merkmalen des Patentanspruchs 9.

Vorteile der Erfindung

Der vorliegenden Erfindung liegt die Idee zugrunde, ein System zur induktiven Energieübertragung auf der Sekundärseite so zu erweitern, dass ein zusätzlicher regelungstechnischer Freiheitsgrad geschaffen wird, der zur Optimierung des jeweiligen Arbeitspunktes genutzt wird. Hierzu wird auf der Sekundärseite ein zusätzlicher Freilaufzustand ermöglicht, indem die beiden unteren Dioden des Gleichrichters durch aktive Schalter ersetzt werden. Durch eine gezielte Ausnutzung dieses neu eingeführten Freilaufzustands kann beispielsweise der Wirkungsgrad der induktiven Energieübertragung in einer Vielzahl von Arbeitspunkten gesteigert werden.

Darüber hinaus kann die induktive Energieübertragung auch bei ungünstigen Koppelfaktoren so betrieben werden, dass in dem Luftspalt zwischen Primärspule und Sekundärspule eine maximale magnetische Feldstärke nicht überschritten wird. Somit können Gefahren, die durch zu hohe magnetische Feldstärken entstehen würden, beispielsweise durch die Erhitzung von metallischen Fremdobjekten, vermieden werden.

Durch die gezielte Ausnutzung des zusätzlichen Freilaufzustands auf der Sekundärseite wird eine induktive Energieübertragung in einem sehr breiten Toleranzbereich des Koppelfaktors ermöglicht. Somit kann insbesondere auch bei Koppelfaktoren, die bei einem konventionellen System keine oder nur eine sehr schlechte induktive Energieübertragung erlauben würden, dennoch eine effiziente induktive Energieübertragung durchgeführt werden. Auch bei einem Betrieb in ansonsten ungünstigen Arbeitspunkten, wie z.B. dem Teillastbetrieb, kann der Wirkungsgrad entscheidend verbessert werden.

Darüber hinaus ermöglicht die erfindungsgemäße induktive Energieübertragung auch eine zusätzliche Schutzfunktion durch gezieltes und dauerhaftes Kurzschließen der Sekundärseite im Fehlerfall. So kann beispielsweise ein unzulässig hoher Anstieg des Primärstroms verhindert werden, der bei einem unkontrollierten sekundärseitigen Lastabwurf auftreten würde.

In einer Ausführungsform ist sind die Resonanzkondensatoren in Serie zur Primär- und/oder Sekundärspulenanordnung verschaltet.

Gemäß einer weiteren Ausführungsform umfasst die Schaltanordnung mindestens einen Halbleiterschalter. Vorzugsweise ist der Halbleiterschalter ein MOSFET oder ein IGBT. Solche Halbleiterschalter ermöglichen auf lange Dauer ein zuverlässiges, schnelles und verlustarmes Schalten der Schaltanordnung.

Gemäß einer weiteren Ausführungsform verbindet die Schaltanordnung die zwei Anschlusspunkte der Sekundärspulenanordnung während jeder Halbwelle der bereitgestellten Wechselspannung für ein vorbestimmtes Zeitintervall. Durch ein periodisches Kurzschließen der Ausgänge der Sekundärspulenanordnung für einen bestimmten Phasenwinkel während jeder Halbwelle der bereitgestellten Wechselspannung kann der zusätzlich neu eingeführte Betriebsmodus gezielt angesteuert werden.

In einer weiteren Ausführungsform wird das Zeitintervall, in der die zwei Anschlusspunkte der Sekundärspulenanordnung miteinander elektrisch verbunden werden, basierend auf der Stromstärke in der Primärspulenanordnung und/oder der Sekundärspulenanordnung bestimmt. Auf diese Weise können die auftretenden Ströme gezielt geregelt werden.

In noch einer weiteren Ausführungsform wird das Zeitintervall, in der die zwei Anschlusspunkte der Sekundärspulenanordnung elektrisch miteinander verbunden werden, während der Energieübertragung adaptiv angepasst. Somit ist selbst bei einem variablen Koppelfaktor, aufgrund von Änderungen während der induktiven Energieübertragung kontinuierlich eine optimale Anpassung des Betriebsmodus möglich. Eine mögliche Optimierungsgröße hierbei ist beispielsweise der Wirkungsgrad des induktiven Übertragungssystems.

Gemäß einer weiteren Ausführungsform verbindet die Schaltanordnung die zwei Anschlusspunkte der Sekundärspulenanordnung nur dann elektrisch miteinander, wenn ein Primärstrom in einer Primärspulenanordnung einen vorbestimmten Wert übersteigt.

Die vorliegende Erfindung umfasst ferner eine Energieübertragungsvorrichtung mit einer Primärspulenanordnung, die dazu ausgelegt ist, ein magnetisches Wechselfeld bereitzustellen, und einer erfindungsgemäßen Vorrichtung zur induktiven Energieübertragung, in die das bereitgestellte magnetische Wechselfeld einkoppelt.

Ferner umfasst die vorliegende Erfindung eine Ladevorrichtung für ein Elektrofahrzeug mit einer erfindungsgemäßen Vorrichtung zur induktiven Energieübertragung.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnungen

Es zeigen:

Figur 1: eine schematische Darstellung eines Schaltbilds für eine Vorrichtung zur induktiven Energieübertragung gemäß einer Ausführungsform;

Figur 2: eine schematische Darstellung der Strom- und Spannungsverläufe in der Primär- und Sekundärspulenanordnung bei Volllast gemäß einer Ausführungsform;

Figur 3: eine schematische Darstellung der Strom- und Spannungsverläufe in der Primär- und Sekundärspulenanordnung bei Teillast;

Figur 4: eine schematische Darstellung von Strom- und Spannungsverläufen in der Primär- und Sekundärspulenanordnung bei Teillast gemäß einer weiteren Ausführungsform;

Figur 5: eine schematische Darstellung einer Ladevorrichtung für ein Elektrofahrzeug mit einer Energieübertragungsvorrichtung gemäß einer Ausführungsform der vorliegenden Erfindung; und

Figur 6: eine schematische Darstellung eines Verfahrens zum Betrieb einer induktiven Energieübertragung, wie es einer weiteren Ausführungsform der vorliegenden Erfindung zugrunde liegt.

Auch wenn die vorliegende Erfindung im Folgenden vorzugsweise in Bezug auf eine elektrische Energieübertragung für das Aufladen eines Elektrofahrzeugs beschrieben wird, so ist die erfindungsgemäße induktive Energieübertragung nicht auf diese Anwendung beschränkt. Darüber hinaus ist es ebenso möglich, die erfindungsgemäße Energieübertragung auch auf jeden beliebigen weiteren Anwendungsfall zu erweitern. Ferner kann die am Ausgang der beschriebenen Vorrichtung bereitgestellte Ausgangsspannung neben dem Aufladen einer Batterie auch für beliebige weitere Anwendungen verwendet werden.

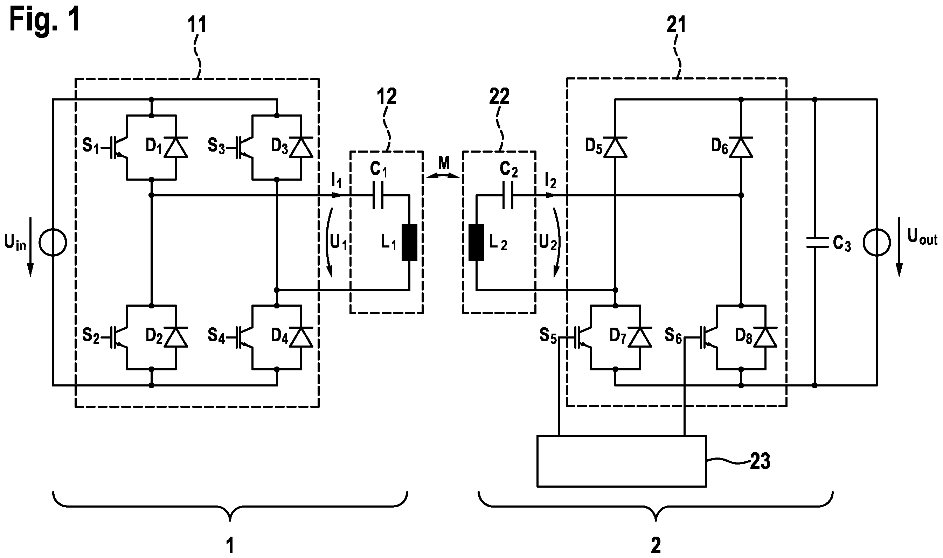

Figur 1 zeigt eine schematische Darstellung einer Schaltungsanordnung für eine induktive Energieübertragung, wie sie einer Ausführungsform der vorliegenden Erfindung zugrunde liegt. Die Schaltungsanordnung umfasst eine Primärseite 1 und eine Sekundärseite 2. Die Primärseite 1 wird von einer Gleichspannungsquelle 10 gespeist. Alternativ ist auch eine Speisung durch eine Wechselspannungsquelle mit anschließender Gleichrichtung möglich. Die Primärseite 1 kann darüber hinaus bei Bedarf auch geeignete Hochsetz- oder Tiefsetzsteller zur Anpassung des Spannungsniveaus der Eingangsspannung $U_{in}$ umfassen. Die Eingangsspannung $U_{in}$ wird einer Wechselrichterschaltung 11 zugeführt. Bei der Wechselrichterschaltung 11 kann es sich beispielsweise um eine Vollbrücke mit vier Schaltelementen S1 bis S4 handeln. Jedes dieser Schaltelemente S1 bis S4 kann eine Freilaufdiode D1 bis D4 parallel geschaltet werden. Die (rechteckförmige) Wechselspannung $U_1$ wird einer Primärspulenanordnung 12 mit einem Serienresonanzkreis zugeführt. Dieser Serienresonanzkreis umfasst beispielsweise die Primärspule $L_1$ des induktiven Übertragungssystems und einen Resonanzkondensator $C_1$. Die von dem Wechselrichter 11 bereitgestellte Wechselspannung $U_1$ ist dabei vorzugsweise auf die Resonanzfrequenz $\omega_0$ des Serienresonanzkreises abgestimmt.

Die Sekundärseite 2 umfasst eine sekundärseitige Spulenanordnung 22 mit einem Schwingkreis, der die Sekundärspule $L_2$ des induktiven Übertragungssystems und einen in Serie geschalteten Resonanzkondensator $C_2$ umfasst. Die beiden Anschlüsse der sekundärseitigen Spulenanordnung 22 sind mit dem Eingang eines Gleichrichters 21 verbunden, bestehend aus den Dioden D5 bis D8, wobei parallel zu den beiden unteren Dioden D7 und D8 des Gleichrichters 21 jeweils ein Schaltelement S5 bzw. S6 angeordnet ist. Bei diesen Schaltelementen S5 und S6 handelt es sich vorzugsweise um Halbleiterschaltelemente. Als solche Halbleiterschaltelemente können beispielsweise MOSFET oder IGBT verwendet werden. Die Dioden D7 und D8 müssen nicht diskret ausgeführt sein, sondern können auch die intrinsischen Dioden eines Halbleiterschaltelements sein. Diese Halbleiterschaltelemente ermöglichen über eine große Anzahl von Schaltvorgängen ein schnelles und verlustarmes Schalten. Andere Schaltelemente, insbesondere andere Halbleiterschaltelemente, sind jedoch ebenso möglich. Die Ausgangsspannung $U_{out}$ des Gleichrichters kann optional über einen Glättungskondensator $C_3$ geglättet werden.

Wie aus Figur 1 zu erkennen ist, werden durch das Schließen der beiden Schaltelemente S5 und S6 die beiden Ausgänge der sekundärseitigen Spulenanordnung 22 miteinander elektrisch verbunden. Die Halbleiterschaltelemente S5 und S6 können beispielsweise über eine Steuervorrichtung 23 gezielt angesteuert werden. Diese Steuervorrichtung 23 kann über geeignete Sensoren Strom- bzw. Spannungswerte aus der Primärseite 1 oder der Sekundärseite 2 erfassen, auswerten und darauf basierend die Ansteuerung der Schaltelemente S5 und S6 vornehmen. Vorzugsweise sind vorhandene Sensoren auf der Primärseite 1 dabei über eine drahtlose Funkschnittstelle mit der Steuervorrichtung 23 gekoppelt. Beispielsweise können somit Strom und/oder Spannung auf der Primärseite bzw. der Sekundärseite erfasst und ausgewertet werden. Basierend auf diesen oder gegebenenfalls auch weiteren Parametern kann die Steuervorrichtung 23 somit die Schaltelemente S5 und S6 für einen optimierten Betrieb ansteuern, wie dies im Nachfolgenden näher beschrieben wird.

Für eine induktive Energieübertragung von der Primärseite 1 zu der Sekundärseite 2 wird durch das Anlegen der Wechselspannung $U_1$ an einer primärseitigen Spulenanordnung 21 von der Primärspule $L_1$ ein magnetisches Wechselfeld erzeugt. Dieses magnetische Wechselfeld koppelt in die Spule $L_2$ des sekundärseitigen Schwingkreises ein und induziert dort eine elektrische Wechselspannung. Die Wechselspannung am Ausgang der sekundärseitigen Spulenanordnung 22 wird durch den Gleichrichter 21 gleichgerichtet, gegebenenfalls durch den Glättungskondensator $C_3$ geglättet und steht dann als Ausgangsspannung $U_{out}$ am Ausgang bereit. Diese Ausgangsspannung $U_{out}$ kann beispielsweise zum Aufladen einer Batterie in einem Elektrofahrzeug verwendet werden.

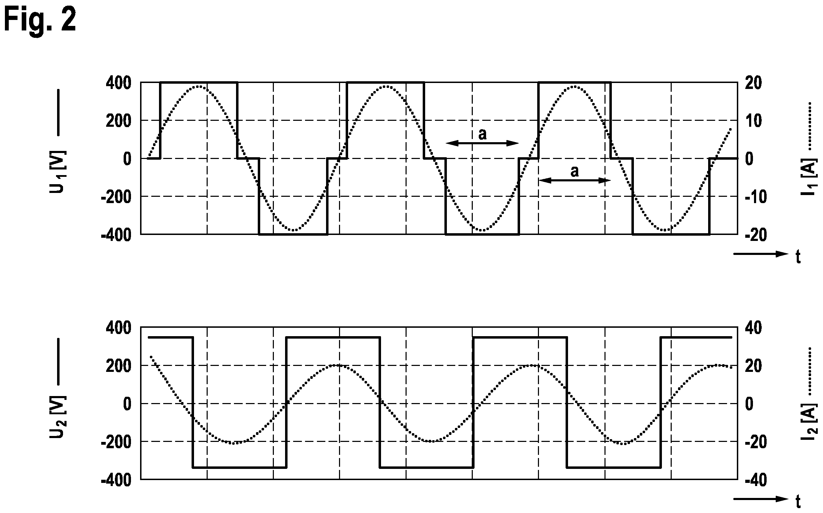

Figur 2 zeigt den Verlauf von Strom und Spannung in den primären bzw. sekundären Spulenanordnungen 12 und 22 im Volllastbetrieb. Die Amplitude der Grundwelle der $U_1$ in der primären Spulenanordnung 12 kann dabei über einen Phasenwinkel zwischen der Ansteuerung der Halbleiterschalter S1 bis S4 eingestellt werden. Daraus ergibt sich eine Ausgangsspannung des Wechselrichters 11, wie er in dem oberen Diagramm dargestellt ist. Der Winkel a bezeichnet dabei die Pulsweite der Spannung $U_1$. Ein Winkel von a=180°, entspricht dabei einer reinen Rechteckspannung. Die Amplitude der Grundwelle der Spannung $U_1$ berechnet sich bei der Resonanzfrequenz ω dabei zu:

$$U_1 = \frac{4}{\pi} U_{in} \sin\frac{a}{2}$$

In einem ersten Betriebsmodus bleiben dabei die beiden sekundärseitigen Halbleiterschalter S5 und S6 dauerhaft geöffnet. Die sekundärseitige Leistungselektronik verhält sich somit wie ein rein passiver Gleichrichter. In diesem Betriebsmodus berechnen sich die Amplituden der Grundwellen der Ströme und der Spannungen bei der Resonanzfrequenz ω in Abbildung 2 betragsmäßig zu:

$$U_2 = \frac{4}{\pi} U_{out} \; ; \quad I_2 = \frac{U_1}{\omega M} \; ; \quad I_1 = \frac{U_2}{\omega M} = \frac{4}{\pi}\frac{U_{out}}{\omega M}$$

Dabei ist der Primärstrom $I_1$ nur von der Ausgangsspannung $U_{out}$ und der Gegeninduktivität M des Spulensystems, bestehend aus der Primärspule $L_1$ und der Sekundärspule $L_2$, abhängig. Dieser Primärstrom $I_1$ kann durch eine Regelung der Pulsweite a des Wechselrichters 11 nicht beeinflusst werden.

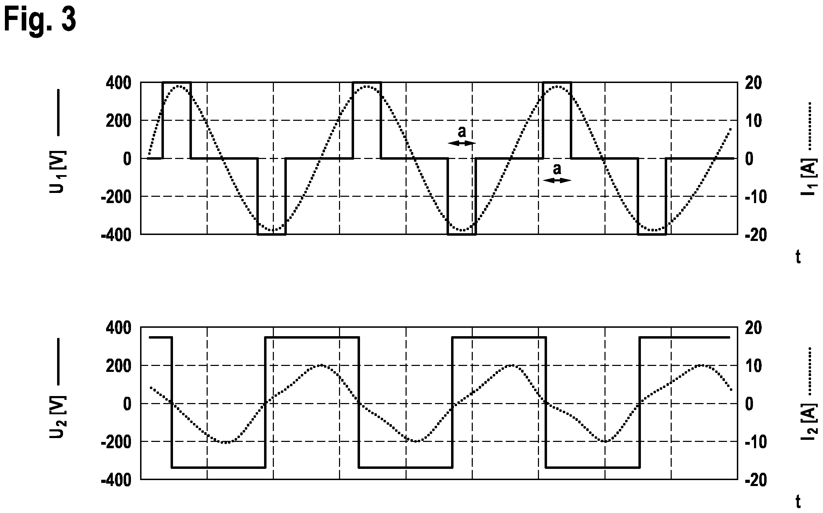

Figur 3 zeigt eine schematische Darstellung des zeitlichen Verlaufs von Primärspannung $U_1$ und Primärstrom $I_1$ im oberen Diagramm, sowie im unteren Diagramm eine schematische Darstellung von Sekundärspannung $U_2$ und Sekundärstrom $I_2$ im Teillastbetrieb, wie sie bei dauerhaft geöffneten Halbleiterschaltern S5 und S6 während der induktiven Energieübertragung auftreten. Dieser Betriebsmodus entspricht den Strom-bzw. Spannungsverläufen, wie sie auch bei einer konventionellen induktiven Energieübertragung mit rein primärseitiger Regelung und passivem Gleichrichter auf der Sekundärseite auftreten. Auch hier kann der Strom $I_1$ auf der Primärseite durch die Regelung der Vollbrücke im Wechselrichter 11 nicht beeinflusst werden. Dies führt dazu, dass beispielsweise im Teillastbetrieb, oder bei einem ungünstigen Koppelfaktor auf der Primärseite, durch den Primärstrom $I_1$ hohe Verluste verursacht werden.

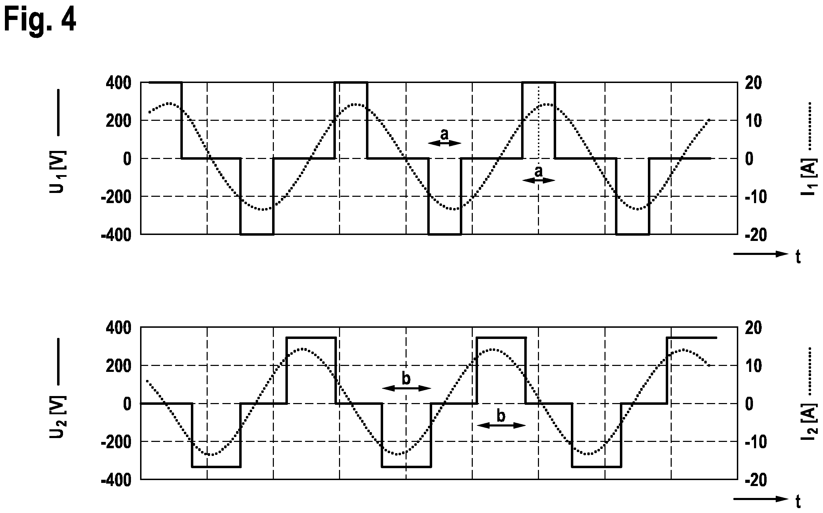

Figur 4 zeigt weiterhin im oberen Diagramm den Verlauf von Primärspannung $U_1$ und Primärstrom $I_1$, sowie im unteren Diagramm den Verlauf von Sekundärspannung $U_2$ und Sekundärstrom $I_2$ im Teillastbetrieb in einem weiteren Betriebsmodus, bei dem die Schalter S5 und S6 der sekundärseitigen Elektronik nun gezielt periodisch geschlossen werden. In diesem Freilaufzustand zirkuliert der Resonanzstrom $I_2$ weiterhin durch die sekundärseitige Spule $L_2$ und den Serienresonanzkondensator $C_2$. Nachdem die Schalter S5 und S6 wieder geöffnet werden, fließt der Resonanzstrom über einen optionalen Glättungskondensator $C_3$ in eine am Ausgang der Sekundärseite 2 angeschlossene Last, wie zum Beispiel eine Batterie.

Der elektrische Winkel b bezeichnet dabei die Pulsweite der Spannung $U_2$ (siehe Fig. 4). Dies entspricht der Zeit, während der die Schalter S5 und S6 geöffnet sind. Die Amplitude der Grundwelle der sekundärseitigen Spannung $U_2$ berechnet sich damit zu:

$$U_2 = \frac{4}{\pi} U_{out} \sin\frac{b}{2}$$

Die Amplitude der Grundwelle der primärseitige Spannung ergibt sich weiterhin zu:

$$U_1 = \frac{4}{\pi} U_{in} \sin\frac{a}{2}$$

Somit ergeben sich die Scheitelwerte von Sekundärstrom $I_2$ und Primärstrom $I_1$ betragsmäßig zu:

$$I_2 = \frac{U_1}{\omega M} = \frac{1}{\omega M}\frac{4}{\pi} U_{out} \sin\frac{a}{2} \; ; \quad I_1 = \frac{1}{\omega M}\frac{4}{\pi} U_{out} \sin\frac{b}{2}$$

Durch den neu eingeführten Freilaufzustand auf der Sekundärseite 2 können daher jetzt sowohl der primärseitige Strom $I_1$, als auch der sekundärseitige Strom $I_2$ gezielt eingestellt werden. Dadurch ist es möglich, die induktive Energieübertragung in einem jeweils optimalen Arbeitspunkt zu betreiben und dabei die induktive Energieübertragung auch bei unterschiedlichem Luftspalt oder Versatz von Primärspule $L_1$ zu Sekundärspule $L_2$ sowie auch im Teillastbetrieb jeweils optimal anzupassen.

Zur Bestimmung der Winkelgröße b des elektrischen Winkels während dem die Schalter S5 und S6 geöffnet sind, sind dabei verschiedene Betriebsstrategien möglich. Für eine erste Betriebsstrategie können beispielsweise auf der Primärseite 1 und der Sekundärseite 2 gleiche Pulsweiten verwendet werden. Das heißt, der Winkel a für die Ansteuerung des Wechselrichters 11 auf der Primärseite 1 entspricht dem Winkel b für die Ansteuerung der Schalter S5 und S6 auf der Sekundärseite 2. In einem vorgegebenen Arbeitspunkt berechnen sich die Winkel a und b somit zu:

$$a = b = 2 \arcsin\left(\frac{\pi}{2\sqrt{2}}\sqrt{\frac{\omega M P_{Soll}}{U_{in}U_{out}}}\right)$$

Dabei ist $\omega$ die Betriebsfrequenz während der induktiven Energieübertragung, $P_{Soll}$ die zu übertragende Leistung, $U_{in}$ die Eingangsgleichspannung auf der Primärseite und $U_{out}$ die Ausgangsgleichspannung auf der Sekundärseite, sowie M die Gegeninduktivität zwischen Primärspule $L_1$ und Sekundärspule $L_2$ bezeichnet. In diesem Fall ist keine zusätzliche Messtechnik für die Bestimmung weiterer Parameter erforderlich. Einzige Voraussetzung ist eine Schnittstelle zur Kommunikation zwischen Primärseite 1 und Sekundärseite 2. Diese Schnittstelle ist vorzugsweise kabellos ausgeführt. Darüber hinaus müssen die Regelgrößen, wie zum Beispiel ein Batterieladestrom, erfasst und ausgewertet werden.

Ist bei einer ungünstigen Positionierung der Spulen $L_1$ und $L_2$ zueinander die Gegeninduktivität M deutlich geringer als bei einer optimalen Positionierung, so müsste ein konventionelles primärseitig geregeltes System mit passiver Gleichrichtung mit einem deutlich höheren Primärstrom $I_1$ betrieben werden, um die gleiche Leistung $P_{Soll}$ bei verminderter Kopplung zu übertragen. Dies würde zu einer deutlichen Steigerung der Verluste auf der Primärseite führen. Durch die erfindungsgemäße Ansteuerung der beiden Schalter S5 und S6 auf der Sekundärseite kann diese Primärstromerhöhung bei verringerter Kopplung geringer ausfallen. Es werden zwar sowohl Primärstrom $I_1$, wie auch Sekundärstrom $I_2$ erhöht, jedoch können die Gesamtsystemverluste in diesem Arbeitspunkt im Vergleich zu einer konventionellen primärseitigen Ansteuerung mit passivem Gleichrichter insgesamt verringert werden. Analoge Betrachtungen gelten auch für den Betrieb der induktiven Energieübertragung im Teillastbetrieb oder sonstigen Änderungen der Lastimpedanz.

Gemäß einer weiteren Betriebsstrategie wird das Verhältnis von Primärstrom $I_1$ zu Sekundärstrom $I_2$ auf einen konstanten Wert eingeregelt. Dabei werden die Phasenwinkel a und b beispielsweise so gewählt, dass für das sekundärseitige Aufladen einer Batterie mit der Nennspannung $U_{Nenn}$ und der aktuellen Batteriespannung $U_{Bat}$ folgende Bedingung gilt:

$$\frac{U_{Bat}}{U_{Nenn}}\sin\frac{b}{2} = \sin\frac{a}{2} = \frac{\pi}{2\sqrt{2}}\sqrt{\frac{\omega M P_{Soll}}{U_{in}U_{Nenn}}}$$

Neben den zuvor bereits beschriebenen Vorteilen wird dabei die tatsächliche Batteriespannung $U_{Bat}$ durch die Sekundärseite 2 von dem System entkoppelt, so dass auf Primärseite 1 und auf Sekundärseite 2 die gleichen Ströme fließen wie in einem Nennpunkt, für den das System optimiert wurde. Es erfolgt somit eine Impedanzanpassung der Last durch die aktive Sekundärseite 2, ohne dass hierzu ein zusätzlicher Gleichspannungswandler erforderlich wäre.

In einer weiteren Betriebsstrategie ist es möglich, den Arbeitspunkt adaptiv anzupassen. Dabei wird ein optimaler Arbeitspunkt adaptiv so eingestellt, dass eine geforderte Leistung $P_{Soll}$ bei einem gegebenen Koppelfaktor und einer gegebenen Batteriespannung $U_{Bat}$ übertragen werden kann und gleichzeitig eine Optimierungsgröße maximiert bzw. minimiert wird. Eine solche adaptive Anpassung des Arbeitspunktes kann aufgrund des zusätzlichen Freiheitsgrades erreicht werden, den die erfindungsgemäße beidseitige Regelung ermöglicht. Als Optimierungsgröße kann beispielsweise der (gemessene) Systemwirkungsgrad dienen, aber auch andere Optimierungsgrößen sind denkbar. Da sich während des Ladevorgangs einer Batterie der Arbeitspunkt nur sehr langsam ändert, kann diese adaptive Anpassung aus regelungstechnischer Sicht langsam gegenüber der inneren Regelungsschleife ablaufen.

Ferner ist es auch möglich, den Arbeitspunkt so anzupassen, dass in dem Luftspalt zwischen Primärspule $L_1$ und Sekundärspule $L_2$ das magnetische Feld möglichst minimal wird. Das magnetische Wechselfeld im Luftspalt des Spulenpaars $L_1$, $L_2$ führt zu einer Erhitzung von metallischen Objekten durch induzierte Wirbelströme, die sich im Bereich zwischen Primärspule $L_1$ und Sekundärspule $L_2$ befinden können. Bei hohen Magnetfeldern stellt dies ein hohes Sicherheitsrisiko dar. Beispielsweise kann sich ein metallischer Gegenstand in diesem Bereich während der Energieübertragung sehr stark erhitzen. Durch die erfindungsgemäße Minimierung des Magnetfeldes im Luftspalt zwischen Primärspule $L_1$ und Sekundärspule $L_2$ kann dieses Sicherheitsrisiko verringert werden. Alternativ kann auch bei einer Beibehaltung einer maximalen magnetischen Feldstärke das Spulenpaar $L_1$, $L_2$ kleiner dimensioniert werden. Somit verringern sich der erforderliche Bauraum und die Kosten für den Aufbau eines solchen Systems zur induktiven Energieübertragung.

In einer weiteren Betriebsstrategie ist es möglich, den Arbeitsbereich des Systems zur induktiven Energieübertragung durch die aktive Regelung auf der Sekundärseite zu erweitern. Dabei bleiben die beiden zusätzlichen Schalter S5 und S6 auf der Sekundärseite 2 während des normalen Betriebs ausgeschaltet. Die sekundärseitige Leistungselektronik 21 verhält sich dabei zunächst wie ein passiver Gleichrichter. Überschreitet der Primärstrom $I_1$ einen festgelegten Schwellwert, so wird die Ansteuerung der zusätzlichen Schaltelemente S5 und S6 aktiviert. Hierdurch ist auch bei ungünstigen Rahmenbedingungen, wie beispielsweise einem schlechten Koppelfaktor, eine Impedanzanpassung möglich. Somit kann das System zur induktiven Energieübertragung selbst dann weiter betrieben werden, wenn auf konventionelle Weise der maximale Primärstrom $I_1$ überschritten würde und das System abgeschaltet werden müsste.

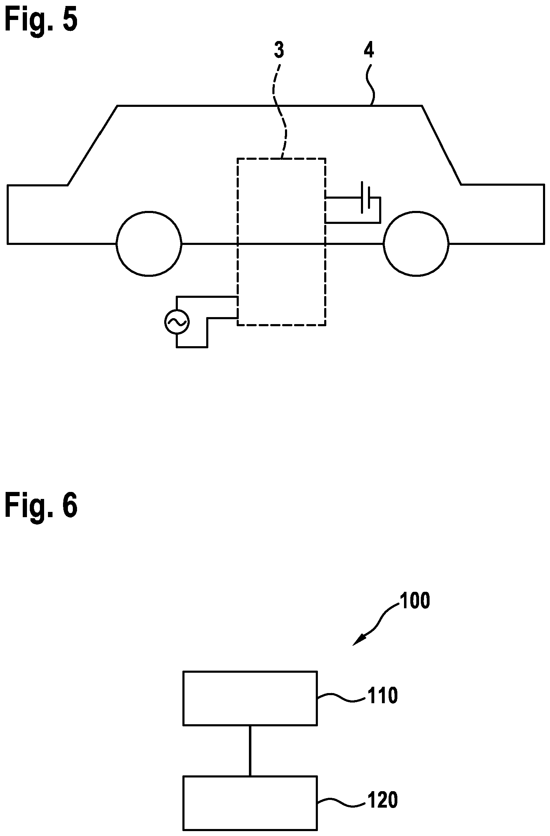

Figur 5 zeigt eine schematische Darstellung einer Ladevorrichtung 3 für ein Elektrofahrzeug 4. Die Ladevorrichtung 3 umfasst dabei die im Zusammenhang mit Figur 1 beschriebenen Komponenten. Insbesondere umfasst die Ladevorrichtung 3 in dem Kraftfahrzeug 4 dabei eine Schaltungsanordnung mit den zusätzlichen Schaltelementen S5 und S6, um die sekundärseitige Spulenanordnung 22 an den Ausgängen elektrisch kurzzuschließen und somit den zusätzlichen erfindungsgemäßen Freilaufzustand zu ermöglichen. Darüber hinaus sind selbstverständlich auch Ladevorrichtungen für andere Anwendungen, wie das Aufladen einer Batterie in einem Kraftfahrzeug, o.ä. möglich.

Figur 6 zeigt eine schematische Darstellung für ein Verfahren 100 zum Betreiben einer Vorrichtung zur induktiven Energieübertragung, wie es der vorliegenden Erfindung zugrunde liegt. In Schritt 110 wird zwischen den zwei Anschlusspunkten einer Sekundärspulenanordnung 22, in die ein magnetisches Wechselfeld einkoppelt, eine Wechselspannung bereitstellt. In Schritt 120 werden die zwei Anschlusspunkte der Sekundärspulenanordnung 22 elektrisch miteinander verbunden, wobei die zwei Anschlusspunkte der Sekundärspulenanordnung 22 während jeder Halbwelle der bereitgestellten Wechselspannung für ein vorbestimmtes Zeitintervall miteinander verbunden werden.

Das vorbestimmte Zeitintervall währenddessen die beiden Anschlusspunkte der Sekundärspulenanordnung 22 elektrisch miteinander verbunden werden, kann dabei, wie bereits oben beschrieben, basierend auf verschiedenen Betriebsstrategien bestimmt werden.

Zusammenfassend betrifft die vorliegende Erfindung eine induktive Energieübertragung von einer Primärspule zu einer Sekundärspule mit einer beidseitigen Regelung und einem zusätzlichen Betriebszustand. Durch diese beidseitige Regelung erfolgt eine primär- und sekundärseitige Ansteuerung der Leistungselektronik nach einer vorbestimmten Betriebsstrategie. Somit kann beispielsweise auch bei ungünstigen Koppelfaktoren der Wirkungsgrad der induktiven Energieübertragung erhöht werden, das Magnetfeld im Luftspalt zwischen Primär- und Sekundärspule verringert werden und die induktive Energieübertragung optimiert werden. In der vorliegenden Erfindung wird diese optimierte Betriebsstrategie durch einen neu eingeführten Freilaufzustand ermöglicht, der ein periodisches Kurzschließen der Sekundärseite erlaubt.

## Patentansprüche

1. Vorrichtung zur induktiven Energieübertragung, mit
   einer Sekundärspulenanordnung (22), die dazu ausgelegt ist, beim Einkoppeln eines magnetischen Wechselfelds zwischen zwei Anschlusspunkten eine elektrische Wechselspannung bereitzustellen;
   einem Gleichrichter (21), der dazu ausgelegt ist, die von der Sekundärspulenanordnung (22) bereitgestellte Wechselspannung gleichzurichten; und
   einer Schaltanordnung (S5, S6), **gekennzeichnet dadurch, dass** sie dazu ausgelegt ist, die zwei Anschlusspunkte der Sekundärspulenanordnung (22) während jeder Halbwelle der bereitgestellten Wechselspannung für ein vorbestimmtes Zeitintervall durch ein Kurzschließen elektrisch miteinander zu verbinden und durch ein Öffnen wieder die Anschlusspunkte zu trennen.

2. Vorrichtung nach Anspruch 1, wobei Resonanzkondensatoren in Serie zur Primär- und/oder Sekundärspulenanordnung verschaltet sind.

3. Vorrichtung nach Anspruch 1 oder 2, wobei die Schaltanordnung (S5, S6) mindestens einen Halbleiterschalter, vorzugsweise einen MOSFET oder einen IGBT, umfasst.

4. Vorrichtung nach einem der Ansprüche 1 bis 3, wobei das Zeitintervall, in dem die zwei Anschlusspunkte der Sekundärspulenanordnung (22) miteinander elektrisch verbunden werden, basierend auf einer gemessenen elektrischen Größe in einer Primärspulenanordnung (12) und/oder der Sekundärspulenanordnung (22) bestimmt wird.

5. Vorrichtung nach einem der Ansprüche 1 bis 4, wobei das Zeitintervall, in der die zwei Anschlusspunkte der Sekundärspulenanordnung (22) miteinander elektrisch verbunden werden, während der Energieübertragung adaptiv angepasst wird.

6. Vorrichtung nach einem der Ansprüche 1 bis 5, wobei die Schaltanordnung die zwei Anschlusspunkte der Sekundärspulenanordnung (22) nur dann elektrisch miteinander verbindet, wenn ein Primärstrom in einer Primärspulenanordnung (12) einen vorbestimmten Wert übersteigt.

7. Energieübertragungsvorrichtung (3), mit
einer Primärspulenanordnung (12), die dazu ausgelegt ist, ein magnetisches Wechselfeld bereitzustellen; und
einer Vorrichtung nach einem der Ansprüche 1 bis 6, wobei das bereitgestellte magnetische Wechselfeld zumindest teilweise in die Sekundärspulenanordnung (22) einkoppelt.

8. Ladevorrichtung für ein Elektrofahrzeug (4) mit einer Vorrichtung zur induktiven Energieübertragung gemäß einer der Ansprüche 1 bis 6.

9. Verfahren (100) zum Betreiben einer Vorrichtung zur induktiven Energieübertragung, mit den Schritten:

Bereitstellen (110) einer Wechselspannung zwischen zwei Anschlusspunkten einer Sekundärspulenanordnung (22);
elektrisches Verbinden (120) der zwei Anschlusspunkte der Sekundärspulenanordnung (22), wobei zwei Anschlusspunkte der Sekundärspulenanordnung (22) während jeder Halbwelle der bereitgestellten Wechselspannung durch ein Kurzschließen für ein vorbestimmtes Zeitintervall miteinander verbunden werden.

## Claims

1. Device for inductive energy transmission, with
a secondary coil arrangement (22) that is designed to provide an alternating electric voltage between two terminal points when an alternating magnetic field is coupled in;
a rectifier (21) that is designed to rectify the alternating voltage provided by the secondary coil arrangement (22); and
a switching arrangement (S5, S6), **characterized in that** it that is designed to connect the two terminal points of the secondary coil arrangement (22) together electrically by a short-circuiting during each half-wave of the provided alternating voltage for a predetermined interval of time and to disconnect the terminal points again by an opening.

2. Device according to Claim 1, wherein resonance capacitors are connected in series with the primary and/or secondary coil arrangement.

3. Device according to Claim 1 or 2, wherein the switching arrangement (S5, S6) comprises at least one semiconductor switch, preferably a MOSFET or an IGBT.

4. Device according to one of Claims 1 to 3, wherein the time interval during which the two terminal points of the secondary coil arrangement (22) are connected together electrically is determined on the basis of a measured electrical parameter in a primary coil arrangement (12) and/or the secondary coil arrangement (22).

5. Device according to one of Claims 1 to 4, wherein the time interval during which the two terminal points of the secondary coil arrangement (22) are connected together electrically is adjusted adaptively during the energy transmission.

6. Device according to one of Claims 1 to 5, wherein the switching arrangement only connects the two terminal points of the secondary coil arrangement (22) together electrically when a primary current in a primary coil arrangement (12) exceeds a predetermined value.

7. Energy transmission device (3), with
a primary coil arrangement (12) that is designed to provide an alternating magnetic field; and
a device according to one of Claims 1 to 6, wherein the provided alternating magnetic field is at least partially coupled into the secondary coil arrangement (22).

8. Charging device for an electric vehicle (4) with a device for inductive energy transmission according to one of Claims 1 to 6.

9. Method (100) for operating a device for inductive energy transmission, with the steps of:

providing (110) an alternating voltage between two terminal points of a secondary coil arrangement (22);
electrically connecting (120) the two terminal points of the secondary coil arrangement (22), wherein two terminal points of the secondary coil arrangement (22) are connected together by a short-circuiting for a predetermined time interval during each half-wave of the provided alternating voltage.

## Revendications

1. Ensemble pour le transfert d'énergie par induction, l'ensemble présentant
un système (22) de bobine secondaire conçu pour délivrer une tension électrique alternative par branchement d'un champ magnétique alternatif entre deux points de raccordement,
un redresseur (21) conçu pour redresser la tension alternative délivrée par le système (22) de bobine secondaire et un circuit (S5, S6), **caractérisé en ce que** l'ensemble est conçu pour relier électriquement l'un à l'autre par court-circuit pendant un intervalle de temps prédéterminé deux points de raccordement du système (22) de bobine secondaire pendant chaque demi-ondulation de la tension alternative délivrée et pour séparer de nouveau les points de raccordement par ouverture.

2. Ensemble selon la revendication 1, dans lequel des condensateurs résonants sont raccordés en série au système de bobine primaire et/ou au système de bobine secondaire.

3. Ensemble selon les revendications 1 ou 2, dans lequel le circuit (S5, S6) comporte au moins un commutateur semi-conducteur, de préférence un MOSFET ou un IGBT.

4. Ensemble selon l'une des revendications 1 à 3, dans lequel l'intervalle de temps au cours duquel les deux points de raccordement du système (22) de bobine secondaire sont reliés électriquement l'un à l'autre est déterminé sur la base d'une grandeur électrique mesurée sur un système (12) de bobine primaire et/ou le système (22) de bobine secondaire.

5. Ensemble selon l'une des revendications 1 à 4, dans lequel l'intervalle de temps au cours duquel les deux points de raccordement du système (22) de bobine secondaire sont reliés électriquement l'un à l'autre est adapté de manière adaptative pendant le transfert d'énergie.

6. Ensemble selon l'une des revendications 1 à 5, dans lequel le circuit relie électriquement l'un à l'autre les deux points de raccordement du système (22) de bobine secondaire uniquement si un courant primaire s'écoulant dans un système (12) de bobine primaire dépasse une valeur prédéterminée.

7. Ensemble (3) de transfert d'énergie, présentant
un système (12) de bobine primaire conçu pour délivrer un champ magnétique alternatif ; et
un ensemble selon l'une des revendications 1 à 6, le champ magnétique alternatif délivré étant injecté au moins en partie dans le système (22) de bobine secondaire.

8. Ensemble de charge pour véhicule électrique (4) doté d'un ensemble de transfert d'énergie par induction selon l'une des revendications 1 à 6.

9. Procédé (100) de conduite d'un ensemble de transfert d'énergie par induction, le procédé présentant les étapes qui consistent à :

délivrer (110) une tension alternative entre deux points de raccordement d'un système (22) de bobine secondaire ;
raccorder électriquement (120) les deux points de raccordement du système (22) de bobine secondaire, deux points de raccordement du système (22) de bobine secondaire étant reliés l'un à l'autre par court-circuit pendant un intervalle de temps prédéterminé pendant chaque demi-ondulation de la tension alternative délivrée.

Fig. 1

EP 3 042 431 B1

## Fig. 2

Fig. 3

Fig. 4

EP 3 042 431 B1

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010055696 A1
- US 20110231029 A1
- DE 102010054472 A1
- GB 2499452 A
- DE 102011119259 A1